# EUROPÄISCHE PATENTANMELDUNG

(11) **EP 2 947 596 A1**
(43) Veröffentlichungstag der Anmeldung: **25.11.2015**
(21) Anmeldenummer: 15001508.9
(22) Anmeldetag: 19.05.2015
(51) Int. Cl.: G06F 21/55, G06F 21/84

(54) **VERFAHREN ZUM BETREIBEN EINES SICHERHEITSMODULS SOWIE EIN SOLCHES SICHERHEITSMODUL**

(30) Priorität: 20.05.2014 DE 102014007382
(71) Anmelder: Giesecke & Devrient GmbH, 81677 München (DE)
(72) Erfinder: Hockauf, Manfred, 85617 Aßling (DE); Pulkus, Jürgen, 80469 München (DE); Kugler, Rene, 81475 München (DE)

(57) **Zusammenfassung**

Es wird ein Verfahren zum Betreiben eines Sicherheitsmoduls mit einer Prozessoreinheit und einer Schnittstelle beschrieben. Eine Sicherheitsinformation (SI) wird bereitgestellt (10) die angibt, ob eine Sicherheitsverletzung vorliegt. Daten werden ausgegeben (15) über die Schnittstelle des Sicherheitsmoduls, wobei das Ausgeben der Daten abhängig von der Sicherheitsinformation (SI) erfolgt. Wenn die Sicherheitsinformation (SI) eine Sicherheitsverletzung anzeigt, werden in dem Schritt des Ausgebens Scheindaten (X) anstelle der auszugebenden Daten (A) ausgegeben. Ein Schritt des Verknüpfens (14) der auszugebenden Daten (A) mit einem Wert der Sicherheitsinformation (SI) wird unabhängig vom Wert der Sicherheitsinformation (SI) stets ausgeführt wird.

## Beschreibung

Die Erfindung betrifft ein Verfahren zum Betreiben eines Sicherheitsmoduls sowie ein solches Sicherheitsmodul. Insbesondere betrifft die Erfindung ein Verfahren zum Betreiben eines Sicherheitsmoduls in Form eines Chipmoduls, beispielsweise für Chipkarten, oder ein solches Chipmodul.

Sicherheitsmodule in Form von Chipkarten mit einer Prozessoreinheit, auch Mikroprozessor-Chipkarten oder Prozessorkarten genannt, werden in vielen sicherheitskritischen Bereichen eingesetzt, beispielsweise als Ausweisdokumente, zum Nachweis der Zugangsberechtigung eines Teilnehmers z.B. zu einem Mobilfunknetz oder zur Durchführung von Zahlungsverkehrstransaktionen. Der Einsatz der Chipkarte erfolgt dabei häufig im Zusammenspiel mit einem für die jeweilige Anwendung vorgesehenen Terminaleinrichtung mit einer Leseeinheit, die dazu ausgestaltet ist, nach einer vorhergehenden Authentisierung sicherheitskritische Daten aus einer solchen Chipkarte auszulesen. Die gleichen Chipmodule können als fest eingebaute Sicherheitsmodule für Terminals (als SAM), Mobilfunkgeräte (als TPM-Modul oder embedded SIM) oder Maschinen (als M2M-Modul) dienen.

Bei der Durchführung von sicherheitskritischen Anwendungen durch ein Sicherheitsmodul ist ein Schutz des Sicherheitsmoduls und der darin hinterlegten sicherheitskritischen Daten, wie beispielsweise kryptographischer Schlüssel, vor Angriffen und unberechtigten Manipulationen notwendig.

Beispiele für eine unberechtigte Manipulation sind die Störung der Strom- und Taktversorgung des Mikroprozessors einer Chipkarte durch Spannungsspitzen bzw. die Störung eines Programmablaufes durch Lichtblitze. Ein weithin aus dem Stand der Technik bekannter Angriff ist dabei die sogenannte differentielle Fehleranalyse (DFA = Differential Fault Analysis), mit der sich der geheime Schlüssel einer mittels eines Mikroprozessors durchgeführten kryptographischen Berechnung auf einer Chipkarte ermitteln lässt. Bei einem DFA-Angriff werden in dem Mikroprozessor, der eine kryptographische Berechnung durchführt, Berechnungsfehler ausgelöst, was durch die vorstehend erwähnten Spannungsspitzen bzw. Lichtblitze erreicht werden kann. Aus den erzeugten Fehlern kann dann mittels mathematischer Methoden der für die kryptographische Berechnung verwendete geheime Schlüssel ermittelt werden. Bei kombinierten Spähangriffen wird über Seitenkanäle wie z.B. dem Stromverbrauch oder die elektromagnetische Abstrahlung der Chipkarte ein geeigneter Zeitpunkt für eine gezielte Störung ermittelt und zu diesem Zeitpunkt die Störung durchgeführt. Beispielsweise können signifikante Merkmale im Stromverbrauch wie z.B. Peaks des Stromverlaufs auf geeignete Zeitpunkte zum Einbringen einer Störung hinweisen.

Es sind Lichtangriffe bekannt, die darauf abzielen den Programmablauf auf der Chipkarte durch einfache oder mehrfache Lichtblitze so zu manipulieren, dass Daten über die IO-Schnittstelle ausgegeben werden, die nicht ausgegeben sondern geheim bleiben sollten.

Eine dateispezifische Verschlüsselung, wie sie in der Anmeldung WO-2006/133934-A1 vorgeschlagen wird, ist geeignet, um die Ausgabe vertraulicher Dateiinhalte zu verhindern.

Ein ebenfalls bekannter Ansatz ist es, in dem Sicherheitsmodul Einheiten zur Erkennung von Sicherheitsverletzungen vorzusehen, wie beispielsweise Sensoren, Sicherheitsroutinen oder programmbegleitende Zustandszähler. Abhängig von der Erkennung einer Sicherheitsverletzung, nach einem (ersten) Angriff, wird regelmäßig entweder eine Abwehrmaßnahme oder der weitere normale Ablauf durchgeführt. Ein gezielter zweiter Angriff (oder Folge-Angriff) auf diese Fallunterscheidung könnte jedoch die Ausführung der Abwehrmaßnahme verhindern.

In US 6944083 B2 wird eine Manipulation in einem OTP-Speicher erkannt und auf eine andere Kopie des Speicherinhalts zurückgegriffen, falls die Vorrichtung weiter seine Funktion erfüllen soll.

Der Erfindung liegt die Aufgabe zugrunde, ein Sicherheitsmodul resistenter insbesondere gegenüber den vorstehend beschriebenen Angriffen zu machen, dabei soll vorzugsweise eine Manipulation der Datenausgabe des Sicherheitsmoduls verhindert werden.

Diese Aufgabe wird durch den Gegenstand der unabhängigen Ansprüche gelöst. Vorteilhafte Ausgestaltungen und Weiterbildungen der Erfindung sind in den abhängigen Ansprüchen angegeben.

Die Erfindung basiert auf dem Ansatz, im Zusammenhang mit der Datenausgabe eine von dem Vorliegen einer Sicherheitsverletzung abhängige Verzweigung des Programmablaufs zu vermeiden. Ein störender Folge-Angriff auf eine Verzweigungsoperation bzw. auf den Verzweigungswert hat eine vergleichsweise hohe Aussicht auf Erfolg. Im Rahmen der Datenausgabe führt er gegebenenfalls zur ungeschützten Ausgabe der Daten im Ausgabepuffer. Die Annahme, dass zur Abwehr des Angriffes das Vorliegen einer Sicherheitsverletzung auch ausgewertet werden muss, trifft jedoch nicht zu.

In einem Verfahren zum Betreiben eines Sicherheitsmoduls mit einer Steuereinheit und einer Schnittstelle werden Daten über die Schnittstelle ausgegeben. Eine Sicherheitsinformation wird bereitgestellt, die angibt ob eine Sicherheitsverletzung vorliegt. Wenn die Sicherheitsinformation eine Sicherheitsverletzung anzeigt, werden in dem Schritt des Ausgebens Scheindaten anstelle der eigentlich auszugebenden Daten ausgegeben. Dafür werden die auszugebenden Daten mit einem Wert der Sicherheitsinformation verknüpft, wobei der Schritt des Verknüpfens unabhängig vom Wert der Sicherheitsinformation stets ausgeführt wird.

Diese Maßnahme verringert zunächst die Erfolgsaussichten eines Folge-Angriffes. Sie mindert zudem auch die Auswirkungen eines erfolgreichen Angriffs auf die Verknüpfung. Da im Programmablauf im Sicherheitsmodul keine Fallunterscheidung durchgeführt wird, muss im Programmablauf nicht einmal erkannt werden, ob ein Angriff erfolgt ist.

In dem Schritt des Verknüpfens bleiben abhängig vom Wert der Sicherheitsinformation entweder die auszugebenden Daten erhalten oder werden die Scheindaten erzeugt. Die Sicherheitsinformation ist so kodiert und die Verknüpfungsoperation so gewählt, dass bei einem Angriff die Scheindaten entstehen. Vorzugsweise wird jedes Byte der auszugebenden Daten mit der Sicherheitsinformation verknüpft.

Vorzugsweise wird in einem für die Datenausgabe verwendeten Speicherort die Sicherheitsinformation gespeichert und mit den Ausgabedaten verknüpft. Auf diesem Wege würde sogar für den Fall, dass der Folge-Angriff zu einem Auslassen der Verknüpfungsoperation führt, nur die Sicherheitsinformation aber nicht die Ausgabedaten ausgegeben.

Die Sicherheitsinformation kann so kodiert sein, dass die Verknüpfung vorgegebene Scheindaten ergibt. Bei jedem Angriff werden somit die gleichen vorgegebenen Scheindaten ausgegeben. Ein Angreifer kann insbesondere nicht Erkennen, welche Sicherheitsverletzung vorliegt bzw. welche Einheit den Angriff abgewehrt hat.

Die Sicherheitsinformation kann alternativ so kodiert sein, dass die Verknüpfung zufällig, variierende Scheindaten ergibt. Ein Angreifer wäre im Ungewissen, ob sein Angriff eine für ihn systematisch auswertbare Folge erzeugt hat.

Eine gesetzte Sicherheitsinformation, welche die Sicherheitsverletzung anzeigt, wird umkodiert in die für die Verknüpfung zu verwendende Sicherheitsinformation, um bei der Verknüpfung geeignete Scheindaten zu erzeugen. Die gesetzte Sicherheitsinformation kann beispielsweise ein (geschriebenes oder gelöschtes) Bit sein.

Durch Umkodierung entsteht beispielsweise aus zumindest einem gesetzten Bit ein Byte, in dem alle Bits einheitlich gesetzt sind, also dem Wert 0xFF oder 0x00. Die Wahl der physischen Kodierung im Speicher, also gesetzter Status entspricht einem geschriebenem Bit 1 oder einem gelöschtem Bit 0, erfolgt abhängig von der bevorzugten Kipprichtung des Speichers. Mit einem Speicher dessen Bits durch einen Angriff leichter von 1 auf 0 kippen (als andersherum) ist bevorzugt 1 als gesetzt anzusehen.

In einem Byte als Sicherheitsinformation könnten unterschiedliche Bits entsprechend unterschiedlichen Angriffsabwehreinheiten zugeordnet sein.

Der Schritt des Umkodierens wird - wie der Schritt des Verknüpfens - unabhängig vom Wert der Sicherheitsinformation stets durchgeführt (verzweigungsfrei). Der Programmablauf zur Ausgabe der Daten ist unabhängig vom Wert der Sicherheitsinformation.

Die Verknüpfung ist eine logische Verknüpfung, also eine Verknüpfung mit einem Booleschen Operator. In dem Schritt des Verknüpfens werden die auszugebenden Daten vorzugsweise durch eine AND-Operation, eine OR-Operation oder eine XOR-Operation verknüpft. Eine AND-Verknüpfung mit einer vollständig gelöschten Sicherheitsinformation (0x00) führt zur Ausgabe von Nullen. Eine OR-Verknüpfung mit einer (bitweise) vollständig geschriebenen Sicherheitsinformation (0xFF) führt zur Ausgabe eines Maximalwertes (0xFF).

Die Länge der Scheindaten entspricht vorzugsweise der Länge der eigentlich auszugebenden Daten. Das Sicherheitsmodul wird die auszugebenden Daten vor dem Verknüpfen als Antwort auf ein zuvor von dem Sicherheitsmodul über die Schnittstelle empfangenes Kommando bestimmen.

Ein Sicherheitsmodul umfasst eine Steuereinheit, eine Schnittstelle zur Ausgabe von Daten und eine Angriffsabwehreinheit. Die Steuereinheit ist eingerichtet ist, abhängig von einer durch die Angriffsabwehreinheit bereitgestellten Sicherheitsinformation über die Schnittstelle entweder Scheindaten oder auszugebende Daten auszugeben. Unabhängig vom Wert der Sicherheitsinformation, welche eine Sicherheitsverletzung anzeigt, wird die Steuereinheit die auszugebenden Daten mit dem Wert der Sicherheitsinformation verknüpfen.

Das Sicherheitsmodul kann eine Vielzahl von Angriffsabwehreinheiten umfassen. Angriffsabwehreinheiten können als Hardwareeinheiten, wie Sensoren, oder als Softwareeinheiten, wie programmbegleitende Zustandszähler oder Prüfwerte, oder als Kombination von Hard- und Softwareeinheiten ausgebildet sein.

Sicherheitsmodule im vorliegenden Sinne können insbesondere tragbare Datenträger, wie Chipkarten, sichere Massenspeicherkarten, RFID-Token oder USB-Token sein. Alternativ können Sicherheitsmodule auch als fest in ein Gerät eingebautes Sicherheitsmodul ausgestaltet sein, wie beispielweise M2M-Modul, TPM-Modul, NFC-Modul oder eingebaute SIM-Karte.

Die Schnittstelle kann eine externe oder interne Schnittstelle des Sicherheitsmoduls sein. Die externe Schnittstelle ist eine Hardware-Schnittstelle des Sicherheitsmoduls. Die interne Schnittstelle kann eine in Hardware oder in Software ausgebildete Schnittstelle des Sicherheitsmoduls sein. Eine (extern) Schnittstelle zu einer externen Einheit - wie Terminal, Mobilfunkgerät oder kontaktloser bzw. kontaktbehafteter Kartenleser - ist der wichtigste Anwendungsfall. Eine in Hardware ausgebildete (interne) Schnittstelle zu einer eigenständigen Untereinheit - wie Display, Tastatur oder Batterie mit Ladeeinheit - eines tragbaren Datenträgers, in welchem das Sicherheitsmodul angeordnet ist, ist ein weiterer Anwendungsfall. Insbesondere für tragbare Datenträger, wie Chipkarten bzw. RFID- oder USB-Token, sind derartige interne Hardware-Schnittstellen zwischen einer zentralen Steuereinheit und den Untereinheiten mit eigenen Steuereinheiten bekannt. Es können eine externe und eine oder mehrere interne Schnittstellen zur Datenausgabe vorliegen, die in der vorliegenden Art abgesichert sind. Denkbar ist schließlich ferner auch die Anwendung der Lösung auf eine Software-Schnittstelle eines Sicherheitsmoduls. Die Daten einer aufgerufenen Funktion werden (z.b. von dem Betriebssystem) über die Software-Schnittstelle (z.b. eine API des Betriebssystems) an die aufrufende Funktion (z.b. eine Anwendung) ausgegeben.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines bevorzugten Ablaufs auf einem Sicherheitsmodul, und
- Fig. 2: eine schematische Darstellung der wichtigsten Komponenten des Sicherheitsmoduls.

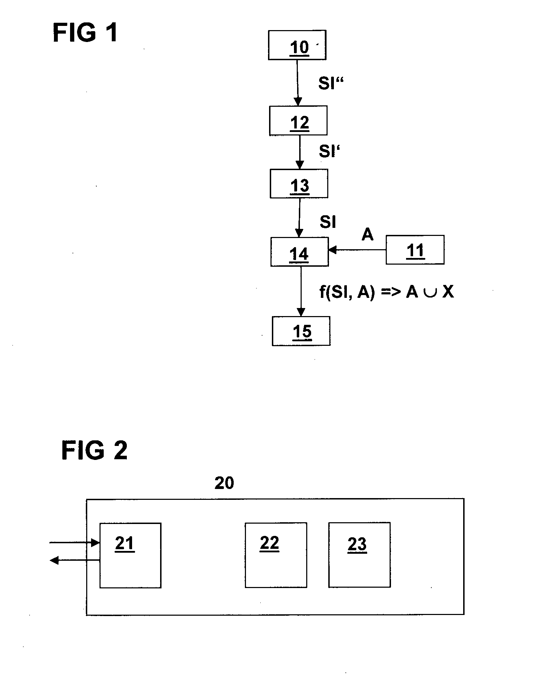

Figur 2 zeigt ein Sicherheitsmodul 20 mit einer Schnittstelle 21, einer Steuereinheit 22 und eine Angriffsabwehreinheit 23. Die Angriffsabwehreinheit 23 kann beispielsweise ein Lichtsensor sein, der Lichtblitze als Sicherheitsverletzung behandelt. Weitere Angriffsabwehreinheiten des Sicherheitsmoduls, die in ausreichender Vielfalt (Sensoren für Spannungsversorgung, Temperatur, ...) bekannt sind, sind vorliegend nicht in der Figur dargestellt. Das Sicherheitsmodul kann zudem zumindest eine Software-Angriffsabwehreinheit verwenden.

Das Sicherheitsmodul empfängt über die Schnittstelle 21 Daten, insbesondere Kommandos, und gibt über die Schnittstelle 21 Daten aus, insbesondere als Antwort auf ein empfangenes Kommando. Kommandos können einen Kommandoanteil und einen Datenanteil umfassen. Als einfaches Beispiel eines Kommandos wird ein Lesebefehl zum Lesen von 20 Byte Daten aus einer im Kommando angegeben, geschützten Datei angenommen. Die Steuereinheit 22 (ein Prozessor) verarbeitet das eingehende Kommando, prüft die Zugriffsbedingungen für die Datei, die beispielsweise eine Authentisierung (im Kommando oder vorab) erfordern und gibt die Daten aus, wenn die Authentisierung vorliegt. Ein Angreifer könnte nun versuchen durch einen Angriff mittels Lichtblitz die Prüfung der Zugriffsbedingung zu stören, um eine Ausgabe der 20 Byte Daten ohne Authentisierung zu erreichen.

Die Angriffsabwehreinheit 23 ist normalerweise eingerichtet beispielsweise bei einem Lichtblitz eine Sicherheitsinformation zu setzen. Wie im Folgenden näher beschrieben, setzt(en) die vorliegende(n) Angriffsabwehreinheit(en) eine initial gesetzte Sicherheitsinformation zurück, wenn kein Angriff vorliegt. Die Sicherheitsinformation zeigt an, ob ein Angriff vorliegt. Eine gesetzte Sicherheitsinformation zeigt an, dass ein Angriff vorliegt.

Mit Bezug auf Figur 1 wird nun beschrieben, wie vorliegend Ausgabedaten A abhängig von einer Sicherheitsinformation SI ausgegeben werden.

Die Sicherheitsinformation wird initial in Schritt 10 auf einen Wert SI" gesetzt, der einen Angriff anzeigt. In Schritt 11 werden die Ausgabedaten A durch das Sicherheitsmodul bereitgestellt. Die auszugebenden Daten A sind eine Antwort auf ein zuvor empfangenes Kommando. Also sind sie beispielsweise die 20 Byte Daten aus der zugriffsgeschützten Datei, welche durch ein empfangenes Lesekommando angefordert wurden. Sofern keine Sicherheitsverletzung vorliegt, sollen die auszugebenden Daten A in Schritt 15 vom Sicherheitsmodul ausgeben werden.

Die auszugebenden Daten A können insbesondere einen Antwortcode (z.b. 0x90 00 für "ok") oder einen Datenteil, also die 20 Byte aus der Datei, und einen Antwortcode umfassen (z.b. Data 0x90 00 für Daten ohne Fehler). Diese Struktur ist beispielsweise aus ISO 7816-4 bekannt.

Der initiale Wert SI" der Sicherheitsinformation wird in einem Schritt 12 in einen geänderten Wert SI' geändert. Der geänderte Wert SI' der Sicherheitsinformation zeigt weiterhin einen Angriff an, sofern die Angriffsabwehreinheit nicht eine vorbestimmte Änderung des Wertes vornimmt. Die vorbestimmte Änderung wird auch als Zurücksetzen der Sicherheitsinformation bezeichnet. Selbst wenn der Schritt 12 durch einen Angriff auf den Programmablauf nicht oder anders ausgeführt, zeigt die Sicherheitsinformation weiterhin einen Angriff an. Die initial gesetzte Sicherheitsinformation wird also im Normalfall (ohne Angriff) durch Schritt S12 zurückgesetzt.

Beispielsweise kann die Sicherheitsinformation ein Byte mit 8 Bits umfassen, wobei jede der acht vorhandenen Angriffsabwehreinheiten sein ihm zugeordnetes Bit setzen bzw. zurücksetzen kann. Alternativ verwenden alle Angriffsabwehreinheiten eines Typs von Angriffsabwehreinheit (Sensor (bzw. Hardware), Software, Software-Untertyp oder Hardware mit Software kombiniert) das gleich Bit oder allgemein alle (vorhandenen) Angriffsabwehreinheiten das gleiche Bit. Wenn alle Angriffsabwehreinheiten ihr Bit zurückgesetzt haben, zeigt die Sicherheitsinformation keinen Angriff mehr an.

In einem optionalen Umkodierungsschritt 12 wird die geänderte Sicherheitsinformation SI' in eine Sicherheitsinformation SI umkodiert. Die Umkodierung erfolgt für einen nachfolgenden Schritt der Verknüpfung 14 der Sicherheitsinformation SI mit den Ausgabedaten.

Aus einer Sicherheitsinformation SI', in welcher nur ein Bit bzw. nur einige der vorhandenen Bits gesetzt sind, wird eine Sicherheitsinformation SI, in welcher alle Bits einheitlich gesetzt sind. Sofern die Sicherheitsinformation keinen Angriff anzeigt, sind bereits alle Bits der Sicherheitsinformation SI' einheitlich zurückgesetzt. Die Sicherheitsinformation SI nach der Umkodierung hat vorzugsweise den Wert 0xFF (bzw. 0x00) und zeigt an, dass ein Angriff erfolgt ist. Ohne Angriff hat die Sicherheitsinformation SI den Wert 0x00 (bzw. 0xFF).

Die Verknüpfung f(SI, A) der Ausgabedaten A mit der Sicherheitsinformation SI ergibt, abhängig von der Sicherheitsinformation SI, entweder die Ausgabedaten oder Scheindaten X. Der Schritt des Verknüpfens 14 wird - insbesondere unabhängig vom Wert der Sicherheitsinformation - stets durchgeführt. Gleiches gilt für die Schritte des Änderns 12 und des Umkodierens 13. Ohne Einsatz einer Verzweigung bzw. ohne Fallunterscheidung bzw. ohne tatsächliche Auswertung ob ein Angriff vorliegt, werden somit entweder die Scheindaten X oder die Ausgabedaten A in Schritt 15 ausgegeben. Die Länge der Scheindaten X entspricht dabei der Länge der auszugebenden Daten A.

Als Scheindaten X können Daten mit einem vorgegebenen, also konstanten, Wert oder Daten mit einem zufällig variierenden Wert ausgegeben werden. Vorzugsweise werden Scheindaten mit dem vorgegebenen Wert 0xFF (bzw. 0x00) ausgegeben.

In einer ersten Variante ist die Verknüpfung eine byteweise XOR-Verknüpfung der Ausgabedaten A mit der Sicherheitsinformation SI. Die Sicherheitsinformation SI hat den Wert 0x00, wenn kein Angriff erfolgt ist, so dass die Verknüpfung die Ausgabedaten A ergibt: *A OR 0x00 = A.* Die Sicherheitsinformation SI hat den Wert 0xFF, wenn ein Angriff erfolgt ist, so dass die Verknüpfung Scheindaten mit dem Wert 0xFF ergibt: *A OR* 0xFF = *0xFF.*

In einer zweiten Variante ist die Verknüpfung eine byteweise AND-Verknüpfung der Ausgabedaten A mit der Sicherheitsinformation SI'. Die Sicherheitsinformation SI hat den Wert 0xFF, wenn kein Angriff erfolgt ist, so dass die Verknüpfung die Ausgabedaten A ergibt: *A AND 0xFF* = *A.* Die Sicherheitsinformation SI hat den Wert 0x00, wenn ein Angriff erfolgt ist, so dass die Verknüpfung Scheindaten mit dem Wert 0x00 ergibt: A *AND 0x00* = *0x00.*

In einer dritten Variante ist die Verknüpfung eine byteweise XOR-Verknüpfung der Ausgabedaten mit einer AND-Verknüpfung aus der Sicherheitsinformation SI und einer Zufallszahl rnd. Die Sicherheitsinformation SI hat den Wert 0x00, wenn kein Angriff erfolgt ist, so dass die Verknüpfung die Ausgabedaten A ergibt: A *XOR* (*0x00 AND rnd*) = *A*. Die Sicherheitsinformation SI hat den Wert 0xFF, wenn ein Angriff erfolgt ist, so dass die Verknüpfung Scheindaten mit zufälligen Werten rnd1, rnd2, ... ergibt: A *XOR* (*0xFF AND rnd) = rnd.*

Im Folgenden wird kurz eine Ausgestaltung anhand eines Pseude-Code-Beispiels beschrieben, in welchem die Software einen Angriff mittels eines Prüfwertes PCurr abwehrt. Eine empfange Kommando-APDU wird verarbeitet und die dabei als Antwort auf das Kommando erzeugten Ausgabedaten werden ausgegeben. Ein Referenzwert PRef - als initiale Sicherheitsinformation - wird so gesetzt, dass er einen Angriff anzeigt. Der Referenzwert PRef und der Prüfwert PCurr werden in diesem Beispiel initial auf einen Zufallswert gesetzt.

| | |
|---|---|
| int main() | |
| { | |
| receiveAPDU(); | / / Kommando empfangen |
| PRef = getHWRND(); | / / Schritt 10: SI zeigt Angriff an |
| PCurr = PRef; | / / Rücksetzwert falsch setzen |
| processAPDU(); | / / Kommando verarbeiten und |
| sendResponseAPDU(); | / / Ausgeben der Antwortdaten |
| } | |

Der initial gesetzte Wert von PCurr wird erst im Laufe der Verarbeitungsroutine processAPDU, welche die Ausgabedaten erzeugt, korrigiert.

| | |
|---|---|
| void processAPDU() | |
| { | |
| PCurr = ∼PRef; | / / Schritt 12a: Rücksetzwert korrigieren, |
| ... | / / Schritt 11a: Kommando abarbeiten |
| return Data; | / / Schritt 11b: Ausgabedaten |
| } | |
| | |
| void sendResponseAPDU() | |
| { | |
| SI = PRef | / / SI übernehmen |
| SI ^= PCurr | / / Schritt 12b: SI zurücksetzen |
| SI = -((((uint16_t) SI)+0xFF)>>8) | / / Schritt 13: Umkodierung 0xFF |
| | |
| for (i=0; i<Len(Data); i++) | / / für alle Bytes der Ausgabedaten |
| currByte = Data[i] \| SI; | / / Schritt 14: OR-Verknüpfung SI |
| SendByte(currByte); | / / Schritt 15: Ausgeben der Daten |
| Next i | |
| } | |

Sollte die Verarbeitungsroutine processAPDU durch einen Angriff, der den Programmcounter beeinflusst, nicht durchlaufen werden, hat der Prüfwert PCurr seinen initialen, zufälligen Wert. Somit kann dieser Angriff mittels Auswertung des Prüfwertes PCurr und des Referenzwertes PRef erkannt werden. Eine Sicherheitsinformation SI wird hier durch eine XOR-Verknüpfung dieser Werte erzeugt.

Diese Sicherheitsinformation SI weicht vom Wert 0x00 ab, falls ein Angriff vorliegt. Für alle Werte ungleich Null wird die Sicherheitsinformation SI umkodiert auf den Wert 0xFF.

Die zu sendenden Daten werden (in einer Schleife) byteweise OR-verknüpft mit der Sicherheitsinformation SI. Folglich werden die i Byte Ausgabedaten unverändert ausgegeben, wenn kein Angriff erfolgt. Im Angriffsfall werden i Byte Daten mit dem Wert 0xFF ausgeben. Selbstverständlich können die i Byte Daten auch als ein Datenblock ausgegeben werden.

Analog kann in einer zweiten Ausgestaltung das aktuelle Byte der Ausgabedaten mit 0x00 AND-verknüpft werden: currByte = Data [i] & SI. Die Umkodierung erfolgt entsprechend auf 0x00: SI = -((((uint16_t) SI)+1)>>8).

In einer dritten Ausgestaltung wird das aktuelle Byte der Ausgabedaten XOR-verknüpft mit der AND-Verknüpfung aus SI und einer Zufallszahl: currByte = Data[i] ^ (rnd & SI). SI wurde wie oben auf 0xFF umkodiert.

Grundsätzlich, also unabhängig von der vorliegenden Lösung, kann es auf Sicherheitsmodulen vorteilhaft sein, empfangene Daten (Kommandos) unmittelbar nach dem Empfang, beispielsweise mit einer Zufallszahl, zu verschleiern. Erst für die Verarbeitung des Kommandos wird die Verschleierung wieder aufgehoben. Ein Angreifer könnte bösartigen Code als Daten zum Sicherheitsmodul senden und versuchen diesen Code zur Ausführung zu bringen durch einen Licht-Angriff auf den Programmablaufzähler. Wenn die empfangenen Daten bis zur Verarbeitung nur verschleiert zwischengespeichert sind, werden die Aussichten für den Erfolg eines solchen Angriffs effektiv reduziert. Analog könnte auch verhindert werden, dass ein Angreifer, der bösartigen Code in eine Datei schreibt und beim Auslesen des Codes aus der Datei den Programmablaufzähler beeinflusst, mit diesem Angriff seinen eigenen Code zur Ausführung bringt. Die auszugebenden Daten werden, z.b. von der Verarbeitungsroutine processAPDU, welche die Daten aus der Datei ausliest, in einem Zwischenspeicher mit einer Zufallszahl verschleiert. Erst unmittelbar vor dem Ausgeben der Daten wird die Verschleierung aufgehoben. Es ist denkbar, die Aufhebung der Verschleierung unmittelbar vor oder zusätzlich in dem vorliegenden Schritt der Verknüpfung auszuführen.

Die gezeigte Schnittstelle 21 ist eine Schnittstelle zu einer externen Einheit. Diese Schnittstellen sind für tragbare Datenträger typischerweise nach einem für Sicherheitsmodule bekannten Standard, wie ISO 7816, USB oder ISO 14443, ausgebildet. Gerade in tragbaren Datenträgern können jedoch zusätzlich zu solchen externen Schnittstellen auch interne Schnittstellen vorliegen. Die Datenausgabe eines Sicherheitsmoduls in einem tragbaren Datenträger zu weiteren eigenständigen Einheiten, wie Display, Tastatur, etc., des Datenträgers kann ebenso abgesichert werden.

Die Angriffsabwehreinheit kann, wie bereits erwähnt, als eine Software-Angriffsabwehreinheit ausgebildet sein. Bevorzugt erzeugt diese Software-Angriffsabwehreinheit die Sicherheitsinformation ohne eine Verzweigung (Fallunterscheidung) im Programmablauf. Der Programmablauf der Software-Angriffsabwehreinheit hängt nicht vom Wert der erzeugten Sicherheitsinformation ab. Einfachstes Gegenbeispiel ist die übliche Fallunterscheidung: Wenn "a > b" dann Schritt X sonst Schritt Y. Vorliegend wird die Sicherheitsinformation (bzw. das dieser Angriffsabwehreinheit zugeordnete Bit der Sicherheitsinformation (Bit 4 von SI)) erzeugt durch mindestens eine Subtraktionsoperation und eine Umkodierungs-Operation auf das Subtraktionsergebnis. Die Umkodierung erzeugt aus einem exakten Subtraktionsergebnis eine binäre Sicherheitsinformation, die also nur noch einen von zwei Werten (z.b. 0 oder 1 bzw. 0x00 oder 0xFF) aufweisen kann. Die Umkodierung erfolgt beispielsweise durch Auswahl des höchstwertigen Bits des Subtraktionsergebnisses (z.b.: Bit 4 von SI = MSB (Adresse A - Adresse B)). Insbesondere kann eine Software-Angriffsabwehreinheit erkennen, ob verwendete Parameter und/ oder Adressen in einem vorgegebenen (zulässigen) Bereich liegen, und entsprechend eine Sicherheitsinformation (bzw. das ihr zugeordnete Bit der Sicherheitsinformation) setzen. Für eine Bereichsprüfung führt die Software-Angriffsabwehreinheit für jede der beiden Bereichsgrenzen (Obergrenze Max und Untergrenze Min) eine Subtraktionsoperation mit Umkodierung aus und erzeugt die Sicherheitsinformation aus der Verknüpfung der beiden Ergebnisse (Bit 4 von SI = (MSB (Adresse Max - Adresse A) OR MSB (Adresse A - Adresse Min)).

Die Abwehrmaßnahme ist unabhängig vom genauen Zeitpunkt des Angriffs bzw. vom Erkennungszeitpunkt und unabhängig vom konkreten Programmcode, der gerade zu diesem Zeitpunkt abgearbeitet wird. Bevorzugt und besonders vorteilhaft ist es, das vorliegende Verfahren für eine Ausgabe von Daten an eine externe Einheit zu verwenden. Theoretisch denkbar ist es, dass Verfahren analog (und ggf. zusätzlich) auf eine interne Software-Schnittstelle anzuwenden. Eine aufgerufene Funktion (des Betriebssystems, einer nachladbaren Zusatzfunktion oder einer Anwendung) kann an die aufrufende Instanz (z.b. eine Anwendung oder eine zweite Anwendung über eine entsprechende API) entweder Scheindaten oder die eigentlich auszugebenden Daten, wie zuvor beschrieben, ausgeben.

## Patentansprüche

1. Verfahren zum Betreiben eines Sicherheitsmoduls mit einer Steuereinheit und einer Schnittstelle, wobei das Verfahren die folgenden Schritte umfasst:
- Bereitstellen (10,12,13) einer Sicherheitsinformation (SI), die anzeigt, ob eine Sicherheitsverletzung vorliegt;
- Ausgeben (15) von Daten (A; X) über die Schnittstelle des Sicherheitsmoduls,
wobei das Ausgeben (15) der Daten abhängig von der Sicherheitsinformation (SI) erfolgt;
**dadurch gekennzeichnet, dass**
ein Schritt des Verknüpfens (14) der auszugebenden Daten (A) mit einem Wert der Sicherheitsinformation (SI) ausgeführt wird,
wobei wenn der Wert der Sicherheitsinformation (SI) eine Sicherheitsverletzung anzeigt, in dem Schritt des Ausgebens Scheindaten (X) anstelle der auszugebenden Daten (A) ausgegeben werden, und
wobei der Schritt des Verknüpfens unabhängig vom Wert der Sicherheitsinformation (SI) stets ausgeführt wird.

2. Verfahren nach Anspruch 1, **dadurch gekennzeichnet, dass** in dem Schritt des Verknüpfens abhängig vom Wert der Sicherheitsinformation (SI) entweder die auszugebenden Daten (A) erhalten bleiben oder die Scheindaten (X) erzeugt werden.

3. Verfahren nach Anspruch 1 oder 2, **dadurch gekennzeichnet, dass** die Sicherheitsinformation (SI) so kodiert ist, dass die Verknüpfung vorgegebene Scheindaten (X) ergibt.

4. Verfahren nach Anspruch 1 oder 2, **dadurch gekennzeichnet, dass** die Sicherheitsinformation (SI) so kodiert ist, dass die Verknüpfung zufällig, variierende Scheindaten (X) ergibt.

5. Verfahren nach einem der Ansprüche 1 bis 4, **dadurch gekennzeichnet, dass** eine Sicherheitsinformation (SI), welche die Sicherheitsverletzung anzeigt, umkodiert (13) wird in die Sicherheitsinformation (SI), um bei der Verknüpfung geeignete Scheindaten zu erzeugen.

6. Verfahren nach Anspruch 5, **dadurch gekennzeichnet, dass** der Schritt des Umkodierens (13) unabhängig vom Wert der Sicherheitsinformation (SI) stets durchgeführt wird.

7. Verfahren nach einem der Ansprüche 1 bis 6, **dadurch gekennzeichnet, dass** in dem Schritt des Verknüpfens die auszugebenden Daten (A) durch eine AND-Operation, eine OR-Operation oder eine XOR-Operation verknüpft werden.

8. Verfahren nach einem der Ansprüche 1 bis 7, **dadurch gekennzeichnet, dass** das Sicherheitsmodul die auszugebenden Daten (A) vor dem Verknüpfen bestimmt (11), insbesondere als Antwort auf ein zuvor von dem Sicherheitsmodul empfangenes Kommando.

9. Verfahren nach einem der Ansprüche 1 bis 8, **dadurch gekennzeichnet, dass** ein initialer Wert der Sicherheitsinformation (SI), welcher eine Sicherheitsverletzung anzeigt, vor dem Verknüpfen (14) geändert wird (12).

10. Verfahren nach einem der Ansprüche 1 bis 9, **dadurch gekennzeichnet, dass** ein initialer Wert der Sicherheitsinformation (SI), welcher eine Sicherheitsverletzung anzeigt, durch eine Softwareroutine erzeugt wird, vorzugsweise durch eine Subtraktions-Operation und eine anschließende Umkodierungs-Operation auf das Subtraktionsergebnis.

11. Sicherheitsmodul (20) mit einer Steuereinheit (22), einer Schnittstelle (21) zur Ausgabe von Daten und einer Angriffsabwehreinheit (23), wobei die Steuereinheit (22) eingerichtet ist, abhängig von einer durch die Angriffsabwehreinheit (23) bereitgestellten Sicherheitsinformation (SI), die eine Sicherheitsverletzung anzeigt, über die Schnittstelle entweder Scheindaten (X) oder auszugebende Daten (A) auszugeben, und dabei unabhängig vom Wert der Sicherheitsinformation (SI) die auszugebenden Daten (A) mit dem Wert der Sicherheitsinformation (SI) zu verknüpfen.

12. Sicherheitsmodul (20) nach Anspruch 11, **dadurch gekennzeichnet, dass** die Schnittstelle (21) eine Schnittstelle zur Ausgabe von Daten an eine externe Einheit ist.

13. Sicherheitsmodul (20) nach einem der Ansprüche 11 bis 12 eingerichtet zur Ausführung eines Verfahrens mit den Schritten nach einem der Ansprüche 2 bis 10.

14. Tragbarer Datenträger mit einem Sicherheitsmodul (20) nach einem der Ansprüche 11 bis 13, **dadurch gekennzeichnet, dass** die Schnittstelle (21) eine Schnittstelle zur Ausgabe von Daten von dem Sicherheitsmodul (20) an eine weitere Einheit des tragbaren Datenträgers ist.
